Europäisches Patentamt

European Patent Office

Office européen des brevets

(19)

(11) Numéro de publication : **0 086 677**
**B1**

(12) # FASCICULE DE BREVET EUROPÉEN

(45) Date de publication du fascicule du brevet :
16.04.86

(51) Int. Cl.⁴ : **G 06 F 15/20**

(21) Numéro de dépôt : **83400008.5**

(22) Date de dépôt : **04.01.83**

(54) **Dispositif de saisie et de restitution en temps réel d'une image formée de trames successives de lignes de balayage.**

(30) Priorité : **15.01.82 FR 8200590**

(43) Date de publication de la demande :
**24.08.83 Bulletin 83/34**

(45) Mention de la délivrance du brevet :
**16.04.86 Bulletin 86/16**

(84) Etats contractants désignés :
**DE FR GB IT NL**

(56) Documents cités :
**FR-A- 2 465 273**
**IEE PROCEEDINGS-E, COMPUTER AND DIGITAL TECHNIQUES, vol. 129, no. 1E, janvier 1982, pages 28-32, Old-Working, GB, DUCK et al.: "Overcoming memory contention in a digital scan convertor"**
**INTERNATIONAL CONFERENCE ON DIGITAL SIGNAL PROCESSING, 30 août - 2 septembre 1978, pages 335-337, Florence, ITALY, A. BOSCOLO et al.: "A modular system for viewing and processing colour images"**
**JOURNAL OF PHYSICS E./SCIENTIFIC INSTRUMENTS, vol. 11, no. 12, décembre 1978, pages 1191-1194, Londres, GB, S. KAWATA et al.: "Man-machine conversational image processing system"**

(73) Titulaire : **INSTITUT NATIONAL DE LA SANTE ET DE LA RECHERCHE MEDICALE (INSERM)**
**101, rue de Tolbiac**
**F-75654 Paris Cedex 13 (FR)**

(72) Inventeur : **Jutier, Pierre**
**77, rue de la Verrerie**
**F-75004 Paris (FR)**
Inventeur : **Bretagnolle, Bernard**
**21, rue E. Faure**
**F-38000 Grenoble (FR)**
Inventeur : **Rubat du Merac, Claire**
**40, Chemin des Buclos**
**F-38240 Meylan (FR)**

(74) Mandataire : **Mongrédien, André et al**
**c/o BREVATOME 25, rue de Ponthieu**
**F-75008 Paris (FR)**

## Description

La présente invention concerne un dispositif de saisie et de restitution en temps réel d'une image formée de trames successives de lignes de balayage. Cette invention s'applique au traitement des images et notamment au traitement des images fournies par une caméra vidéo en vue de leur affichage éventuel sur un écran de télévision. Elle s'applique plus particulièrement au traitement des images tramées fournies par un microscope électronique.

On sait que pour traiter des images tramées, balayées par lignes successives, il faut convertir en valeurs numériques les signaux analogiques obtenus en sortie d'un système de production d'images (le convertisseur analogique-numérique utilisé étant alors qualifié de système de saisie). Ces valeurs numériques sont enregistrées dans une mémoire et, généralement, les dispositifs de saisie et d'affichage en temps réel, d'une image formée de trames successives de lignes de balayage, avec lesquels il est possible de traiter l'image, sont constitués de la manière suivante :

Ces dispositifs comportent après le système de production d'images, un convertisseur analogique-numérique qui permet de transformer les signaux analogiques obtenus à la sortie des moyens de production d'images, en valeurs numériques. Ces valeurs numériques sont transférées par l'intermédiaire d'un BUS de communication dans une mémoire d'enregistrement. Un système de traitement est relié à cette mémoire pour traiter ces valeurs numériques. Un générateur d'adresses câblé permet d'assurer l'écriture et la lecture des valeurs numériques inscrites en mémoire avant ou après leur traitement. Les données numériques traitées extraites de la mémoire sont alors transmises à des moyens de restitution ou d'affichage, par l'intermédiaire d'un convertisseur numérique-analogique. Tous les circuits de commande qui permettent, éventuellement en association avec des moyens de traitement, de faire transiter les valeurs numériques fournies par un convertisseur analogique-numérique relié à des moyens de production d'images, sont des circuits câblés qui ne présentent aucune souplesse d'utilisation.

On sait, en télévision par exemple, que chaque image est tramée. Cette image est obtenue par juxtaposition d'un certain nombre de lignes horizontales dont l'ensemble constitue une trame. Cette trame est renouvelée plusieurs dizaines de fois par seconde.

Le signal électrique correspondant à cette image comprend une partie analogique qui traduit l'intensité lumineuse, et une partie à caractère impulsionnel : les signaux de synchronisation qui permettent de repérer les débuts de ligne et de trame (synchronisation horizontale et verticale). C'est ce signal électrique dit « vidéo composite » qui est transmis par tous moyens appropriés, et à partir duquel on peut reconstituer l'image à l'arrivée. Il est en soi connu de convertir ce signal analogique en une succession de valeurs numériques, aux fins de transmission ou de traitement.

L'état connu de la technique sera mieux compris à l'aide des figures schématiques annexées, dans lesquelles :

la figure 1 représente schématiquement un dispositif connu de saisie et d'affichage d'une image de télévision, ne faisant pas intervenir de système de traitement de signal ;

la figure 2 représente schématiquement un dispositif connu de saisie et d'affichage d'une image de télévision, faisant intervenir un système de traitement du signal saisi ;

la figure 3 représente schématiquement, mais de façon plus détaillée, le dispositif connu de la figure 2.

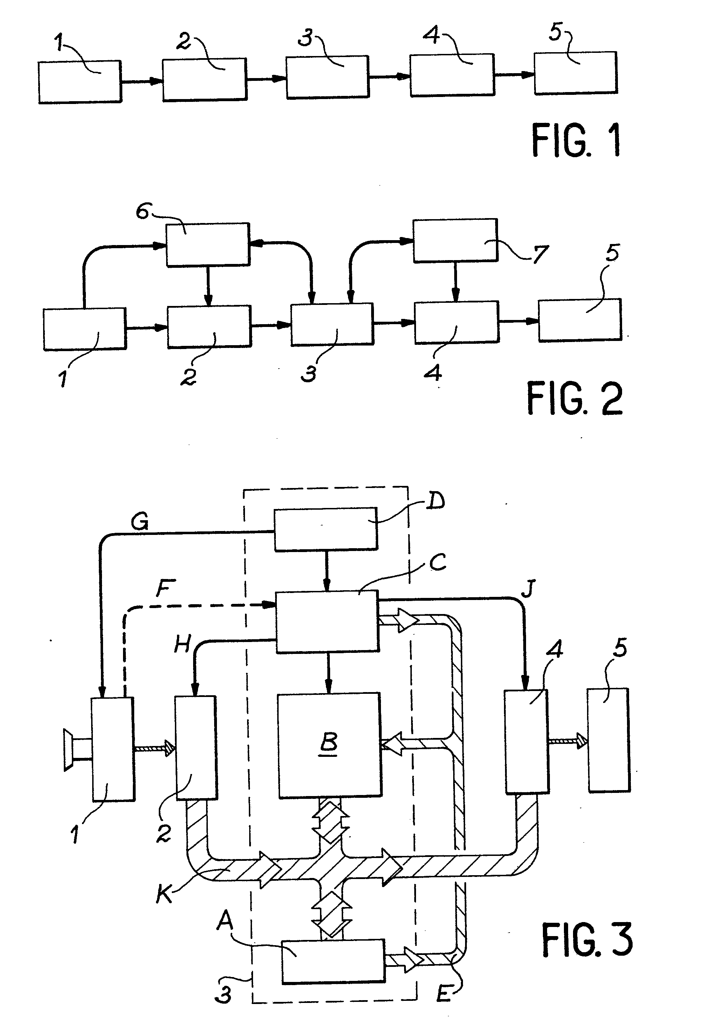

Le dispositif connu de saisie et d'affichage le plus simple, représenté sur la figure 1 comprend une caméra vidéo 1 (ou toute autre source d'image équivalente), un convertisseur analogique numérique 2, des moyens de transmission 3, un convertisseur numérique analogique 4 et des moyens de restitution ou d'affichage, tels qu'un moniteur vidéo 5.

Les contraintes imposées aux moyens de conversion et de traitement sont très différentes selon qu'il s'agit de transmission ou de traitement. Dans le premier cas, il suffit que ces moyens aient une fréquence de fonctionnement suffisante pour garantir la restitution fidèle du signal global, c'est-à-dire de la partie de ce signal qui représente la luminance (qualité de l'image, finesse, contraste, etc...) et de la partie contenant les impulsions ou signaux de synchronisation (stabilité, cadrage, etc...), sans qu'il soit nécessaire de prendre en compte la signification de ces signaux de synchronisation. En particulier, les convertisseurs 2 et 4 peuvent très bien fonctionner de façon indépendante (à la fois l'un de l'autre et des moyens de transmission 3) aussi longtemps que la condition de fréquence minimale évoquée ci-dessus est satisfaite.

Il en va tout autrement lorsqu'après les moyens de production de l'image et la conversion analogique-numérique des signaux analogiques représentatifs de cette image, les valeurs numériques subissent un traitement, avant leur transfert vers le convertisseur numérique-analogique et les moyens de restitution ou d'affichage.

La figure 2 représente schématiquement un dispositif connu de saisie et de restitution qui inclut un système de traitement des valeurs numériques issues du convertisseur analogique-numérique. Dans ce cas, il faut que la valeur numérique correspond à chaque point de l'image soit logée en un emplacement parfaitement défini d'une mémoire d'ordinateur. En d'autres termes, il faut réaliser une application biunivoque entre l'espace bidimensionnel de l'image et l'espace unidimensionnel d'adressage. Cela n'est possible qu'en se référant aux repères des coordonnées en X, Y de l'image, autrement dit aux signaux de synchronisation (horizontale et verticale) ; cela tant au moment de la saisie (conversion analogique-numérique) que de l'affichage (conversion numérique-analogique). Il faut donc asservir le fonctionnement des convertisseurs à des sources de synchronisation, d'une part, et au système d'adressage de la mémoire de traitement d'autre part, ce qui est représenté sur la figure 2 ; sur cette figure, par rapport au dispositif de la figure 1, sont rajoutés des moyens de commande 6 du convertisseur analogique-numérique et des moyens de commande 7 du convertisseur numérique-analogique, avec les liaisons logiques correspondantes. Un dispositif de ce type est décrit par exemple dans le document FR-A-2 465 273.

Ce document décrit un multiprocesseur interactif pour la saisie et le traitement d'images. Ce multiprocesseur comprend une unité de saisie constituée par une caméra de télévision par exemple, dont les signaux sont appliqués à un convertisseur analogique-numérique destiné à numériser le signal issu de l'unité de saisie, et à ranger ce signal numérisé dans une mémoire. Ce système comporte aussi une unité d'affichage comprenant un convertisseur numérique-analogique et permettant de convertir une image numérisée et traitée, en un signal de télévision. Il comprend aussi, une unité de traitement d'images constituée de plusieurs microprocesseurs. Chaque microprocesseur permet de traiter une partie de l'image dont les valeurs numériques correspondantes sont enregistrées dans la mémoire. Cette mémoire de masse est elle-même reliée à un processeur maître qui commande les microprocesseurs de traitement d'images qui peuvent être qualifiés d'esclaves. Le processeur maître a essentiellement pour rôle de gérer l'accès à la mémoire de masse ainsi que les priorités des demandes d'accès de ces microprocesseurs à la mémoire, par l'intermédiaire d'un bus.

En définitive, compte tenu de la redondance inévitable entre les moyens de commande 6 et 7, il est préférable de se référer à la figure 3, fonctionnellement équivalente de la précédente.

Dans la figure 3, comme dans les deux figures précédentes, le mouvement général de l'information ou des valeurs numériques, a lieu de gauche à droite, de la production à l'affichage (restitution de l'image). Les moyens de traitement sont maintenant découpés en quatre blocs fonctionnels, soit de bas en haut : les moyens de traitement proprement dits A, des moyens de mémorisation constitués par une mémoire d'image B, des moyens de commande C, un générateur de synchronisation vidéo D. L'information transite entre les convertisseurs analogique-numérique 2 et numérique-analogique 4, la mémoire et les moyens de traitement par le bus de données K.

On ne fera que mentionner au passage les moyens de traitement A, car si c'est leur présence qui conditionne la complexité du schéma, leur fonction peut être désynchronisée des fonctions de saisie et d'affichage et il est donc possible de traiter de ces dernières indépendamment. Notons que les moyens de traitement peuvent être répartis dans la mémoire B si la structure de cette dernière s'y prête. La mémoire B est une mémoire informatique à accès aléatoire. Sa structure peut être fort diverse. Elle peut notamment être décomposée en modules, avec possibilité éventuelle d'accès simultané à plusieurs de ces modules (multiaccès). Ce sont les moyens de commande C qui assurent la correspondance biunivoque entre l'image (saisie ou restituée) et l'espace mémoire, en coordonnant les opérations de conversion avec les accès en mémoire correspondants (en sortie comme en entrée). Ces moyens de commande accomplissent cette tâche en émettant simultanément les valeurs d'adresse voulues sur le bus adresse E à destination de la mémoire D et des signaux de synchronisation H et J vers les convertisseurs.

Enfin, le générateur de synchronisation vidéo D a été ici disjoint des moyens de commande pour tenir compte de l'état de la technique. En effet de tels organes existent actuellement sous forme de circuits intégrés uniques fournissant tous les signaux nécessaires pour l'obtention d'une image vidéo (impulsions de synchronisation horizontale et verticale, début d'image, signaux d'extinction de faisceau, commande de caméra, etc...). A noter que pendant la saisie, la synchronisation vidéo peut être prélevée directement sur la caméra (ou extraite du signal vidéo composite), comme suggéré en F sur la figure 3 ; l'autre terme de l'alternative est de faire synchroniser la caméra 1 à partir du générateur D par la ligne G.

D'autre part, pour chacun des standards normalisé de télévision, les exigences en fréquence du générateur de synchronisation vidéo, sont très exactement déterminées et une plus grande souplesse est obtenue par cette séparation des fonctions.

L'invention a pour but de remédier aux inconvénients des dispositifs connus de saisie et d'affichage d'image incluant des moyens de traitement et de commande interposés entre les moyens de production d'image et les moyens de restitution d'image. Les principaux inconvénients de ces dispositifs résultent du fait que les moyens de commande de la saisie et de la restitution d'image sont uniquement câblés et sont donc complexes, coûteux, peu fiables ; il est de plus impossible avec ces moyens câblés, de modifier facilement les modalités d'obtention et d'exploitation des valeurs numériques enregistrées en mémoire. S'il en est ainsi, c'est parce que pour saisir, dans l'intervalle de temps entre deux tramés successives, une image ayant une définition acceptable, il faut recourir à des fréquences de conversion élevées, supérieures à 10 MHz pour 512 points par ligne en 625 lignes, par exemple.

L'invention vise donc à réaliser un dispositif de saisie et d'affichage d'image incluant des moyens de commande et d'adressage mémoire offrant les avantages suivants :

choix arbitraire du standard vidéo : nombre de lignes, entrelacées ou non ; modification instantanée de ce choix ;

choix libre et dynamique de la représentation de l'image en mémoire avec entre autres la possibilité de charger une valeur donnée (correspondant à un point de l'image) en plusieurs emplacements de mémoire (recouvrement) ;

organisation physique et/ou logique de la mémoire-image largement indifférente (dans certaines limites de performances) ;

possibilité d'asservir le fonctionnement instantané et le choix des options à un organe informatique de supervision (ordinateur central) ;

reconfiguration aisée par simple reprogrammation (sans modification du matériel) ;

réduction de la complexité et du coût, amélioration de la fiabilité.

Ces résultats sont obtenus, selon l'invention, en reportant sur des moyens de commande comprenant notamment un automate programmé, une partie des fonctions assurées jusqu'à présent par des moyens câblés. Ce partage est possible en tirant parti au maximum de l'une des caractéristiques essentielles de l'image vidéo, à savoir l'écart considérable entre fréquence horizontale et fréquence verticale. On sait que si la durée d'une ligne est 64 µs, la durée d'une trame est de 20 ms (en standard 625 lignes entrelacées) et l'on voit que si le premier temps exige des moyens câblés, le second est accessible à un automate programmé.

A cet effet, comme on le verra plus loin en détail, dans le dispositif de l'invention, les fonctions des moyens qui commandent les organes de saisie et de restitution d'image sont élaborées par des moyens câblés et par des moyens programmés :

Les moyens câblés agissent sur chaque ligne de balayage en quelques dizaines de microsecondes au maximum ; ils sont réalisés en assemblant des éléments logiques simples et rapides (par exemple en technologie TTL ou ECL) ne permettant que les programmations les plus élémentaires, comme le chargement initial d'un compteur.

Les moyens programmés sont constitués par un automate programmé réalisé par exemple au moyen d'un microordinateur à grande vitesse tel qu'il en apparaît maintenant dans le commerce. Cet automate programmé reçoit les impulsions de synchronisation vidéo (horizontale, verticale, début image) et élabore, en fonction de ces données, des signaux de commande à destination de la partie câblée qui peut être qualifiée d'horloge rapide d'échantillonnage.

D'autre part l'automate programmé reçoit des messages en provenance d'un superviseur, qui pourra notamment choisir un programme de l'automate parmi plusieurs programmes possibles et faire démarrer le fonctionnement sur la base du programme choisi, dit alors « programme en cours ». La gamme des possibilités ainsi programmées à l'avance peut être étendue à volonté : fonctionnement en saisie ou en restitution, nombre de lignes ; entrelacement ou non ; nombre de points par ligne ; zone de destination ou d'origine en mémoire ; zones de recouvrement en mémoire, etc...

Les programmes peuvent être contenus dans tous moyens appropriés d'enregistrement tels que des mémoires à lecture seule, donc aisément mis à jour par simple remplacement de boîtiers. Ils peuvent aussi être enregistrés en mémoire vive, la charge de leur gestion et de leur mise en place avant démarrage incombant alors au superviseur.

Le rôle des moyens de commande câblés est alors limité à un séquencement rapide et cyclique d'adressage dans un cadre étroitement limité par exemple sur 256 ou 512 points (représentant une rotation sur 9 bits au maximum) et à l'émission de signaux de commande à destination des convertisseurs et des éventuelles barrières de bus commandant les accès à la mémoire.

La jonction entre les moyens câblés et programmés se fait au niveau du comptage des lignes. Cette fonction peut être confiée à l'automate programmé s'il est capable de s'activer, d'incrémenter (ou décrémenter), tester, décider, agir dans le délai imparti (64 µs par exemple). Sinon cette fonction peut être assurée par un compteur câblé (éventuellement programmable) réagissant sur l'automate. Evidemment, la première solution, assurant la flexibilité maximale, est préférable à tous points de vue.

L'invention a pour objet un dispositif de saisie et de restitution en temps réel d'une image formée de trames successives de lignes de balayage, comportant des moyens (1) de production d'image fournissant des signaux analogiques représentatifs d'une image, un convertisseur analogique-numérique (2) recevant ces signaux analogiques et fournissant des valeurs numériques, des moyens de traitement (A) aptes à traiter ces valeurs numériques et/ou produire d'autres valeurs numériques aptes à constituer une image pour permettre un affichage des moyens de mémorisation (B) des valeurs numériques à traiter et des valeurs numériques traitées ou produites, un convertisseur numérique-analogique (4) des valeurs numériques fournies par la mémoire, des moyens (D) pour synchroniser les moyens de production d'image et les convertisseurs analogique-numérique et numérique-analogique, un BUS de communication (K) entre les moyens de mémorisation (B), les moyens de traitement (A) et les convertisseurs (2, 4), et des moyens de commande (C1, C2) reliés aux moyens de synchronisation (D) pour commander l'adressage des moyens de mémorisation (B) et la synchronisation des convertisseurs (2, 4), caractérisé en ce que les moyens de commande comprennent un automate programmable (C1) et un circuit de commande câblé (C2) esclave de l'automate (C1), l'automate (C1) et le circuit de commande (C2) présentant des sorties d'adressage (7, 8) reliées à des moyens d'adressage des moyens de mémorisation (B), tandis que d'autres sorties du circuit de commande esclave (C2) sont reliées à des entrées de synchronisation des convertisseurs (2, 4), pour permettre la saisie et la restitution de l'image correspondant aux valeurs numériques enregistrées en mémoire, le dispositif comprenant en outre un démultiplexeur (DMX) des valeurs numériques fournies par le convertisseur analogique-numérique (2), un multiplexeur (MX) recevant les valeurs numériques traitées, et un mélangeur (MIX) connecté entre les moyens d'affichage (5) et le convertisseur numérique-analogique (4), pour mélanger les signaux de sortie de ce convertisseur (4) avec un signal de synchronisation (S) fourni par les moyens de synchronisation (D), l'automate programmable (C1) étant un processeur qui commande le circuit de commande esclave (C2) pour que celui-ci adresse les moyens de mémorisation (B) pour que les moyens de traitement (A) traitent les valeurs numériques correspondant aux lignes de balayage de l'image saisie et/ou restituée en fonction des indications fournies par un superviseur (9) de l'automate programmable, le circuit esclave (C2) comprenant un générateur de fréquence de conversion (FC) actionné par l'automate programmable (C1), deux compteurs (P1, P2) reliés à l'automate programmable (C1) et au générateur (FC), un séquenceur d'adresses (S1) relié aux compteurs (P1, P2) pour commander l'adressage de la mémoire (B), l'un des deux compteurs (P2) fournissant des signaux (CDMX, SYCAN, CMUX, SYCNA) de synchronisation du démultiplexeur (DMX), du convertisseur analogique-numérique (2) du multiplexeur (MUX) et du convertisseur numérique-analogique (4), ces signaux permettant en outre de reconfigurer les multiplexeur et démultiplexeur pour obtenir plusieurs modes possibles de fonctionnement : images monochromatiques ou images polychromatiques, ce compteur (P2) étant relié au générateur (FC) et à l'automate (C1) qui lui fournit un signal de cadrage vertical (CV) qui est aussi appliqué à l'autre compteur (P1), cet autre compteur (P1) fournissant au séquenceur d'adresses (S1) un signal de cadrage horizontal (CH).

Selon un mode de réalisation particulier, le dispositif comprend en outre un séparateur de synchronisation (SSY) relié au convertisseur analogique-numérique (2), aux moyens de production d'image (1) et aux moyens de synchronisation (D), ce séparateur fournissant des signaux de repérage comprenant un signal de début d'image (IS), un signal de balayage vertical (VS) et un signal de balayage horizontal (HS), ainsi que des signaux vidéo (VIDE) débarrassés d'impulsions de synchronisation, les signaux de repérage étant appliqués à l'automate programmable (C1) par l'intermédiaire d'un commutateur (COM) et les signaux vidéo étant appliqués au convertisseur analogique-numérique (2).

Selon un autre mode de réalisation particulier, l'automate programmable (C1) comprend un processeur (C7) dont les entrées sont reliées au commutateur (COM) et au superviseur (9) et dont les sorties sont reliées, d'une part, au circuit esclave et, d'autre part, à des bascules de mémorisation (C4, C5, C6) avec amplificateurs de sorties à 3 états, les sorties de ces bascules étant reliées à des moyens d'adressage de la mémoire (B).

Selon encore un autre mode de réalisation particulier, le processeur (C7) est un microordinateur monoboîtier.

Enfin, l'invention s'applique à la saisie ou à la restitution d'une image tramée fournie par un microscope électronique ou par une source vidéo, ainsi qu'à la synthèse d'images vidéo.

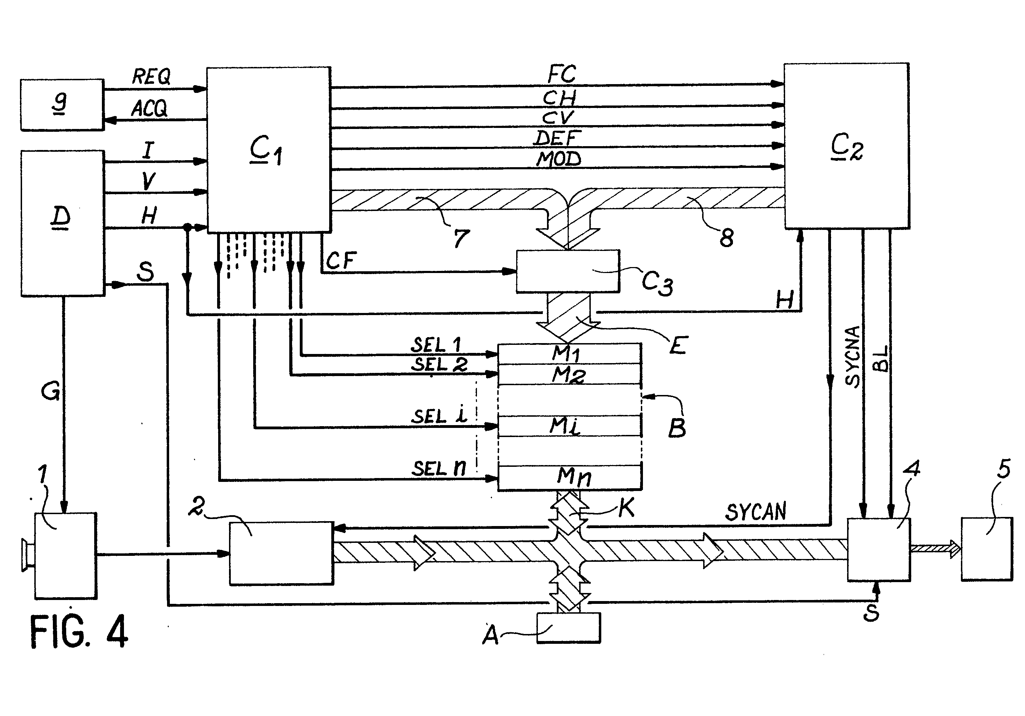

Les caractéristiques et avantages de l'invention ressortiront mieux de la description des figures 4 à 7 suivantes, dans lesquelles :

la figure 4 représente schématiquement un dispositif de saisie et de restitution conforme à l'invention,

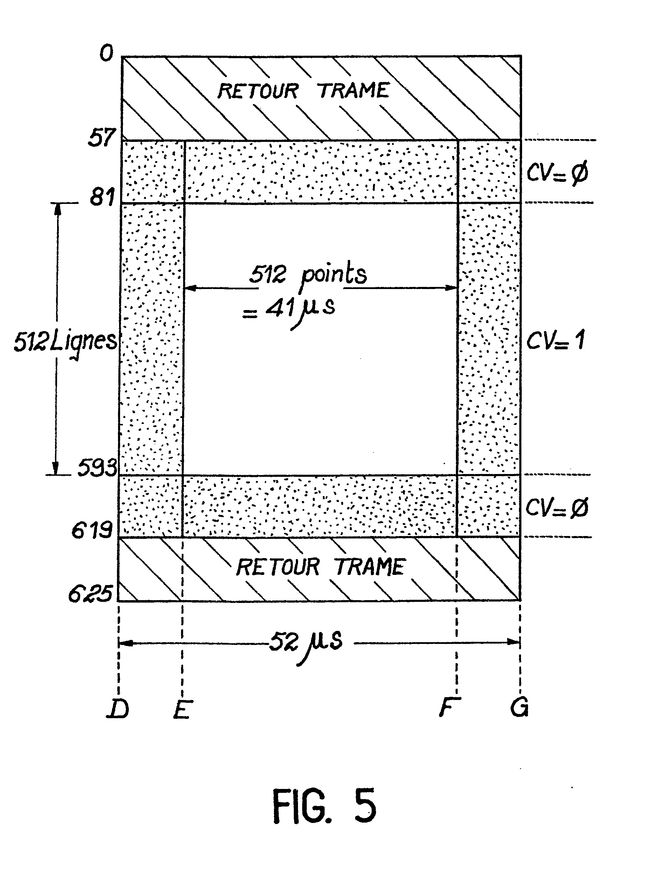

la figure 5 illustre un exemple de balayage d'une image tramée, exécuté avec le dispositif de l'invention,

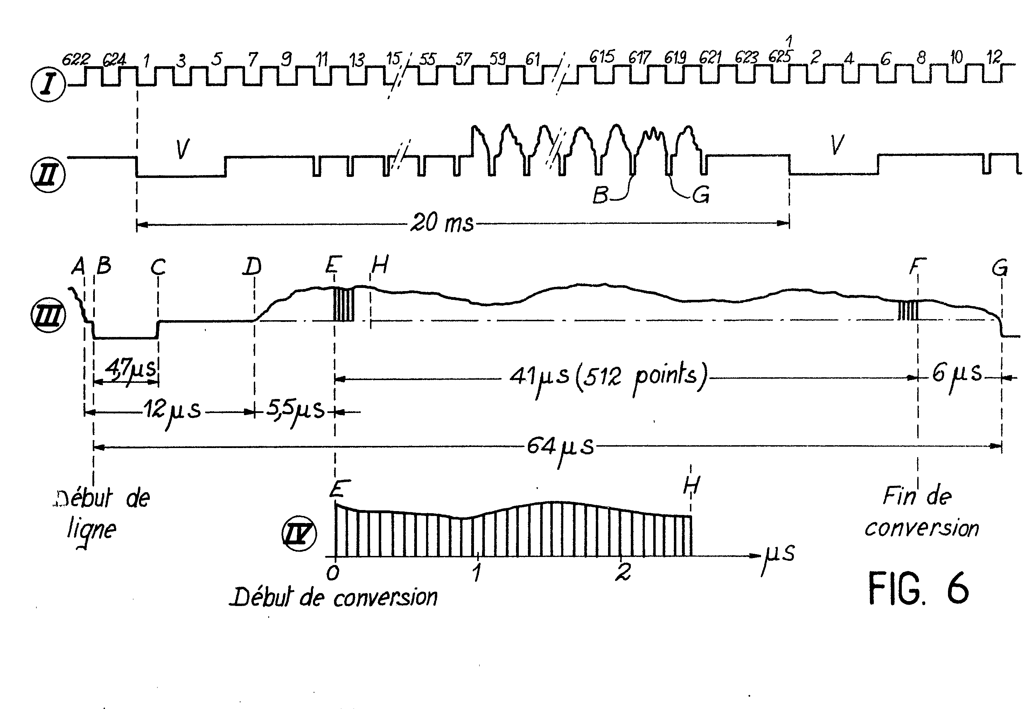

la figure 6 représente en I, II, III, IV les principaux signaux intervenant dans le dispositif de l'invention, pour l'exécution du balayage de la figure précédente,

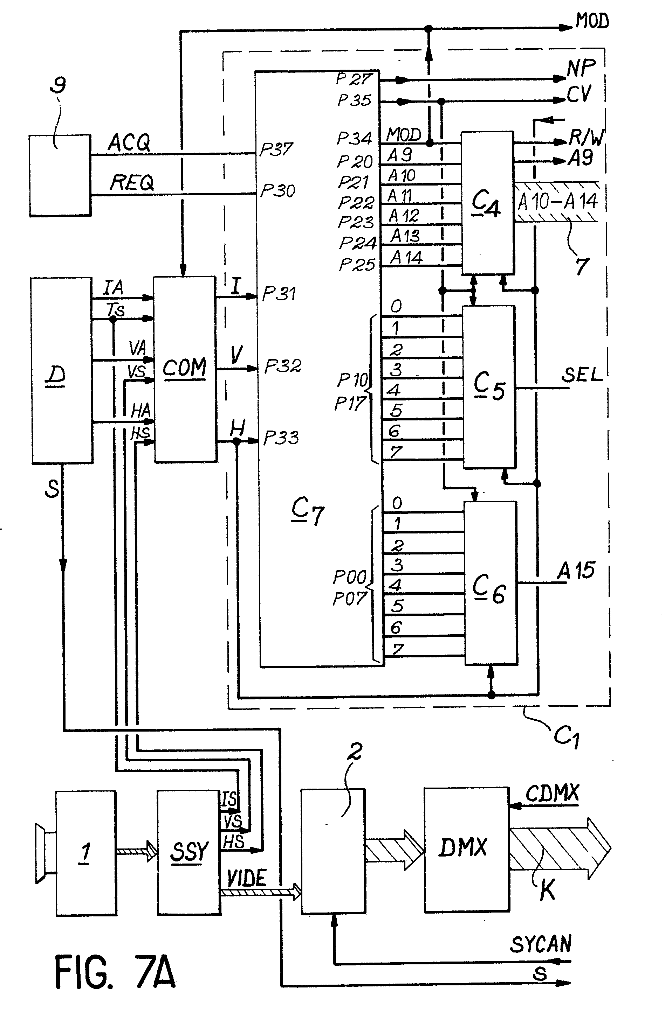

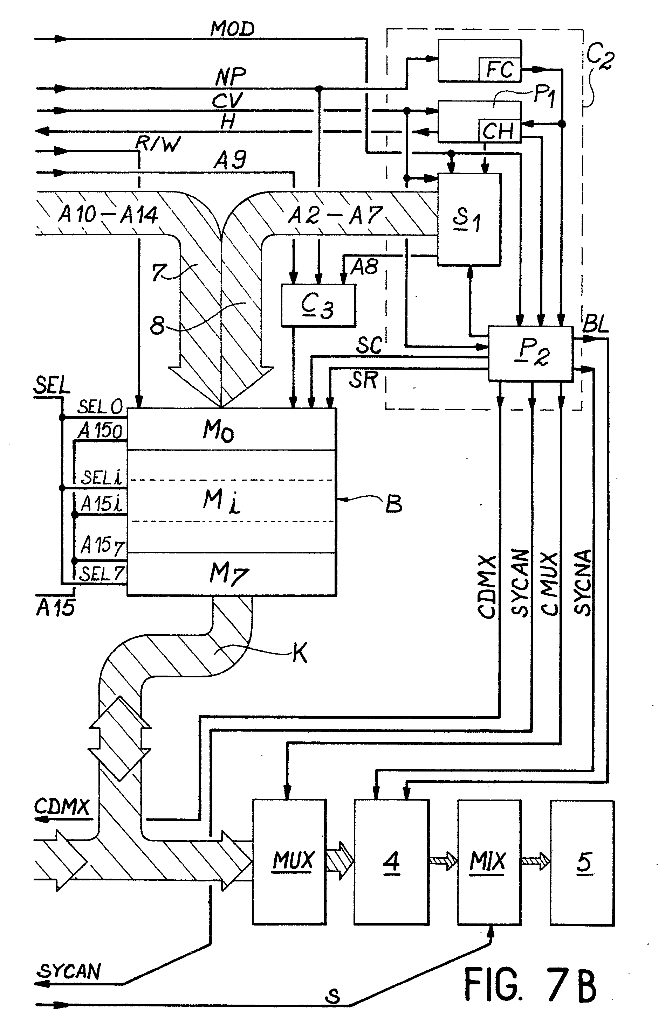

les figures 7A et 7B représentent schématiquement mais de manière plus détaillée, une variante d'un dispositif de l'invention.

La figure 1 représente schématiquement un dispositif de saisie et de restitution, conforme à l'invention. Ce dispositif permet une saisie et une restitution en temps réel, d'une image formée de trames successives de lignes de balayage.

Ce dispositif comprend des moyens 1 de production d'image constitués par exemple par une caméra vidéo et fournissant des signaux analogiques représentatifs de l'image, au moins un convertisseur analogique-numérique 2 recevant ces signaux analogiques et fournissant des valeurs numériques, des moyens de traitement aptes à traiter ou à produire des valeurs numériques pour permettre la restitution d'une image, par exemple sur des moyens d'affichage 5 ; le dispositif comprend aussi, des moyens de mémorisation B des valeurs numériques à traiter et des valeurs numériques traitées ou produites, ainsi qu'au moins un convertisseur numérique-analogique 4 des valeurs numériques traitées ou produites, et des moyens D pour synchroniser les moyens de production d'image et les convertisseurs analogique-numérique et numérique-analogique. Enfin, le dispositif comprend un BUS de communication K, entre les moyens de mémorisation B, les moyens de traitement A et les convertisseurs 2, 4 ; des moyens de commande C1, C2 qui seront décrits plus loin en détail, sont reliés aux moyens de synchronisation D pour commander l'adressage des moyens de mémorisation B et la synchronisation des convertisseurs 2, 4. Les moyens de commande C1, C2 comprennent un automate programmable C1 et un circuit de commande câblé C2, esclave de l'automate ; l'automate C1 et le circuit de commande C2 présentent des sorties d'adressage 7, 8 reliées à des moyens d'adressage (non représentés et connus) des moyens de mémorisation B. D'autres sorties du circuit de commande esclave C2 sont reliées à des entrées de synchronisation des convertisseurs 2, 4 pour permettre l'affichage de l'image correspondant aux valeurs numériques traitées ou produites. On entend par convertisseurs, des moyens de conversion adaptés au type de signal image utilisé. Par exemple, dans le cas d'une image chromatique normale, ces convertisseurs comprendront trois parties distinctes correspondant aux trois composantes vert, rouge, bleu du signal couleur.

L'automate programmable C1 est en fait un processeur qui commande le circuit de commande esclave C2 et qui est apte à adresser par ses sorties 7, les moyens de mémorisation B pour que les moyens de traitement A soient en mesure de traiter les valeurs numériques correspondant à chaque trame de l'image, en fonction de la programmation de l'automate C1.

Le circuit de commande esclave C2 est un circuit à logique câblée apte à adresser par ses sorties 8, les moyens de mémorisation B pour que les moyens de traitement A soient en mesure de traiter les valeurs numériques correspondant aux lignes de balayage de l'image, en fonction de la programmation de l'automate C1.

Les sorties d'adressage 7, 8 de l'automate C1 et du circuit de commande C2, sont reliées aux moyens d'adressage des moyens de mémorisation B par l'intermédiaire d'un organe répartiteur C3, qui peut être constitué par un multiplexeur.

Les moyens de mémorisation B se décomposent en n modules $M_1$, $M_2$, ...$M_i$, ...$M_n$ (n pouvant être réduit à 1). Chacun des modules $M_i$ peut être activité indépendamment des autres par une ligne de sélection SELi, de sorte que plusieurs modules peuvent recevoir simultanément des informations à partir du bus de données K.

Normalement le dispositif fonctionne soit en saisie, à partir d'une caméra vidéo par exemple, soit en restitution, vers les moyens d'affichage 5, étant entendu qu'entre saisie et affichage s'intercale un traitement par les moyens de traitement A. Ce traitement doit tenir compte de la façon dont les valeurs numériques sont chargées dans la mémoire B sous la commande de l'automate C1 et du circuit C2. La programmation de l'automate C1 peut être effectuée à partir d'un superviseur 9.

Toutefois, il est possible que les deux fonctions de saisies et d'affichage soient simultanées, auquel cas les données numériques en provenance du convertisseur analogique-numérique 2, sont transmises directement au convertisseur numérique-analogique 4, sans faire intervenir la mémoire B. Ce fonctionnement dégradé est possible par le jeu normal de BUS de données K. On suppose, bien entendu que le mot « BUS » recouvre non seulement les conducteurs transmettant des signaux, mais aussi des organes de commutation liés à ces conducteurs, par exemple des barrières à trois états.

Il est également possible d'envisager un multiplexage du BUS de données K, ce qui permet simultanément une saisie dans une certaine zone de la mémoire et une restitution à partir d'une autre zone (pouvant d'ailleurs se recouvrir ou non avec la précédente). Un tel mode de fonctionnement suppose, soit une faible définition de l'image, soit des performances très élevées de la mémoire et des convertisseurs.

Les fonctions de commande sont réparties essentiellement entre deux organes séparés : l'automate programmé C1 et le circuit de commande C2, esclave de l'automate C1. Les moyens de synchronisation D commandent ici la caméra 1 par un signal G, et fonctionnent donc tout le temps, en mode saisie comme en mode de restitution. Ces moyens de synchronisation fournissent sur trois entrées de l'automate C1, les signaux H (début de ligne), V (début de trame) et I (début d'image).

De l'automate C1 partent les lignes de sélection SELi des modules mémoire $M_i$, un groupe de fils d'adresses 7 et un certain nombre de lignes de commande FC, CH, CV, DEF, MOD, à destination du circuit de commande C2. Enfin, l'automate C1 reçoit des ordres de sélection et de démarrage REQ en provenance du superviseur 9 et lui renvoie éventuellement des accusés de réception ACQ.

Le circuit de commande C2 reçoit, en plus des signaux de commande énumérés ci-dessus, le signal de synchronisation horizontale H qui permet de synchroniser ce circuit à chaque début de ligne. Elle émet deux types de signaux : d'une part, des signaux de commande des convertisseurs, SYCAN, vers le convertisseur analogique-numérique et SYCNA et BL, vers le convertisseur numérique-analogique, et d'autre part, des valeurs d'adresse en parallèle sur les fils 8 à destination de la mémoire.

Le circuit de commande C1, qui n'est pas représenté ici en détail est constitué pour l'essentiel par un oscillateur de référence, des diviseurs de fréquence, des compteurs et des organes de commutation ou de mémorisation transitoire. Tous ses paramètres de fonctionnement sont définis par les signaux de commande précités. Notons qu'il n'y a pas lieu de préciser ici le mode de transmission (série ou parallèle) de ces paramètres. FC est un signal impulsionnel qui indique la fréquence effective de conversion (par exemple 12,5 ou 6,25 MHz), CH définit le cadrage horizontal, par exemple le nombre de périodes de l'oscillation de référence s'écoulant entre l'impulsion H et le début effectif de la conversion. CV donne le cadrage vertical (indiquant si une ligne donnée de l'image doit être convertie ou non). DEF indique la définition, autrement dit le nombre de points effectivement pris en compte pendant la phase de conversion. MOD enfin, indique le mode : saisie ou restitution.

Les figures 5 et 6 représentent un exemple de balayage d'une image tramée ainsi que certains des signaux intervenant dans le dispositif, pour l'exécution de ce balayage. Précisons comment différents paramètres interviennent dans la saisie ou la restitution d'une image, en examinant un exemple particulier illustré par les figures 5 et 6 ; ces figures sont relatives à une image 625 lignes, entrelacées, donc à deux trames. En I sur la figure

6, sont représentées les impulsions de base de la synchronisation vidéo (fréquence ligne de 15 625 Hz), ceci pour une trame impaire et le début de la trame paire suivante, le signal composite correspondant étant représenté en II. Les numéros indiqués en I sont les numéros des lignes (les impulsions de synchronisation verticale V ne sont pas indiquées). Comme le montre la figure 5 la phase d'extinction du faisceau (permettant le retour de celui-ci entre deux trames) s'étend jusqu'à la ligne 57 et recommence à la ligne 621, ce qui représente globalement pour les deux trames une perte de 63 lignes. Restent 562 lignes parmi lesquelles nous souhaitons prendre seulement 512 lignes, laissant ainsi une marge de 25 lignes en haut et en bas de l'image.

Pour ce faire l'automate C1 va compter les lignes à partir de la synchronisation verticale et fera commuter le signal CV de l'état logique 0 à l'état logique 1 par exemple quand il parviendra à la ligne $N_0$ (81) pour le ramener de 1 à 0, quand le compte parviendra à 593 (pour la trame impaire). Quand CV = 0, le circuit de commande est bloqué, quand CV = 1, il fonctionne ligne par ligne en affichage comme en restitution. D'autre part, le signal BL de commande du faisceau en restitution peut être directement asservi à CV, de façon à obtenir automatiquement des bandes noires au-dessus et au-dessous de 512 lignes effectivement prises en compte.

Le signal vidéo entre deux débuts de ligne consécutifs (de B à G, en II sur la figure 6) est montré en III sur la figure 6. Le début de ligne est pris au front descendant B de l'impulsion de synchronisation horizontale B-C. De A à D s'étend la plage d'extinction du faisceau correspondant au retour de ligne. L'image utile s'étend donc à très peu de chose près, de D à G comme indiqué également sur la figure 5. On souhaite extraire de cette image 512 points correctement centrés, avec une fréquence de conversion de 12,5 MHz, ce qui donne à chaque ligne une durée de conversion de 41 µs. Dans ces conditions la conversion doit débuter en E, à peu près 17 µs après le début de ligne pour se terminer en F (6 µs avant le début de la prochaine ligne). On voit en IV sur la figure 6, un agrandissement du début de conversion E-H. Pour obtenir ce résultat le circuit de commande peut être constitué, comme on le verra plus loin par un premier compteur actionné de préférence par l'horloge de référence qui est initialisée à une valeur correspondant au paramètre CH de cadrage horizontal et qui redémarre à chaque impulsion H. Parvenu au compte prescrit (au point E de III-figure 6), il lance le séquenceur d'adresses et un second compteur qui va de 0 à 512, afin d'arrêter au point F correspondant à la marge de droite de l'image, sinon la conversion, ou la progression des adresses, au moins l'entrée en mémoire ou la restitution des valeurs numériques (voir aussi la figure 5). De même BL (figure 4) peut être asservi à ce second compteur afin d'éteindre automatiquement le faisceau entre D et E et entre F et G, afin d'obtenir automatiquement des marges verticales noires à gauche et à droite au moment de l'affichage. Le second compteur est actionné par la fréquence de conversion (égale à 12,5 MHz dans l'exemple ci-dessus) qui peut être choisie entre certaines limites et peut être obtenue soit par division à partir d'une fréquence de référence fixe, soit au moyen d'un oscillateur variable à commande par la tension (dit VCO), soit par une combinaison de ces deux moyens.

Reste à préciser à quoi correspondent exactement les deux bus d'adresses 7 et 8 émanant respectivement de l'automate programmable C1 et du circuit de commande C2 (figure 4). Dans le cas, par exemple, d'une image non entrelacée de 512 lignes de 512 points, qui doit être convertie à raison d'un octet par point et chargée dans une mémoire organisée par octets, la capacité de mémoire nécessaire est égale à 256 Koctets correspondant à une adresse sur 18 éléments binaires ou bits (eb). On voit immédiatement que les 9 éléments binaires (eb), de poids faible, peuvent correspondre aux 512 points d'une ligne et les 9 eb de poids fort, aux 512 lignes. C'est la solution la plus simple dans laquelle les valeurs sont simplement empilées en mémoire dans l'ordre séquentiel des adresses au fur et à mesure de leur saisie. Il a donc été défini un bus 8 d'adresses points de 9 eb (par exemple de AP0 à AP8) et un bus 7 d'adresses ligne également de 9 eb (de AL0 à AL8). Ces deux bus se rejoignent pour former le bus adresses global E (A0 à A17) de la mémoire image B. Pour simplifier l'exposé, on suppose ici que chaque module $M_i$ a la capacité suffisante et qu'un seul module est en jeu. On a correspondance immédiate entre

AP0-AP8 et A0-A8 d'une part
et AL0-AL8 et A9-A17 d'autre part.

Supposons maintenant que l'on veuille se contenter d'une image à 256 points par ligne. Le bus adresses points se réduit à 8 eb et l'élément binaire AP8 cesse d'être actionné par le circuit de commande. Si l'on garde la correspondance précitée, la mémoire n'est remplie significativement que par blocs de 256 octets séparés par des blocs « morts » de même taille.

Pour retrouver le remplissage compact du cas précédent il faut commuter A8 afin de l'amener en correspondance avec un des eb du bus adresses lignes (AL0, AL8), étant bien entendu que le nouveau programme de l'automate pour le cas de 256 points par ligne, sera prévu pour faire face à cette situation et fera progresser les adresses lignes de façon adéquate. Cette commutation des eb de frontière entre les deux bus, respectivement d'adresse point et d'adresse ligne, incombe à un système répartiteur C3 sous contrôle du signal CF en provenance de l'automate programmé C1. Le système répartiteur C3 peut être constitué par un multiplexeur.

On décrira maintenant de manière plus détaillée un exemple d'une variante de réalisation de l'invention, en se référant aux figures 7A et 7B où tous les éléments qui apparaissent dans les figures précédentes ont été désignés par les mêmes symboles.

Sur cette figure, le dispositif est représenté de manière plus détaillée. Il comprend en outre un séparateur de synchronisation SSY, un démultiplexeur DMX des valeurs numériques fournies par le convertisseur analogique-numérique 2 et un multiplexeur MUX des valeurs numériques en provenance de la mémoire B, avant leur conversion par le convertisseur numérique-analogique 4. Enfin, un mélangeur MIX est disposé entre le convertisseur numérique-analogique 4 et les moyens d'affichage 5. Le dispositif inclut aussi d'autres moyens qui seront décrits plus loin en détail. Le circuit esclave C2 est représenté ici de manière plus détaillée. On distingue un premier compteur P1, un deuxième compteur P2, un séquenceur d'adresses S1 et un générateur interne fournissant notamment la fréquence de conversion FC.

La mémoire est constituée par 8 modules comprenant chacun 32 boîtiers de mémoire dynamique de $16 K \times 1$ eb. Chaque module a donc une capacité de 64 Koctets. Les échanges d'information ont lieu par un bus de données K en parallèle sur 32 bits (4 octets), cela afin d'avoir des vitesses de transfert compatibles avec les mémoires courantes actuelles. Les adresses en mémoire utilisent 14 eb (A2 à A15) (comme les adresses des boîtiers individuels) en 2 fois 7 eb multiplexés : adresses rangées et adresses colonnes, le multiplexage étant commandé par deux signaux spécifiques, respectivement de sélection rangée (SR) et de sélection colonne (SC), émis à la suite l'un de l'autre dans un rapport temporel déterminé. Certaines contraintes s'exercent sur les adresses rangées (poids faibles) qui doivent être incrémentées séquentiellement à intervalles relativement rapprochés pour assurer le rafraîchissement. Les deux bits d'adresse A0 à A1 n'apparaissent pas. Ils correspondent à l'individualisation des 4 octets contenus dans le bus de 32 bits. Notons encore que les moyens de traitement (non représentés) peuvent être répartis entre les modules de mémoire M0 à M7.

A la suite de la caméra 1, est intercalé le séparateur de synchronisation SSY, en lui-même connu, qui fournit d'une part les trois signaux de repérage Image IS, vertical VS et horizontal HS et d'autre part un signal vidéo débarrassé des impulsions de synchronisation VIDE à destination du convertisseur analogique-numérique 2.

Lors du fonctionnement en restitution, les signaux de synchronisation I, V et H, pour l'automate programmé C1, sont donc obtenus à partir du signal vidéo composite entrant. Lors du fonctionnement en restitution, c'est le générateur de synchronisation D qui entre en jeu et fournit LA, VA, HA, un commutateur triple COM commandé par le signal MOD assurant la sélection entre les uns et les autres.

L'automate programmé C1 est réalisé au moyen d'un microordinateur monoboîtier du commerce C7 (par exemple le modèle Z8 du Zilog ou tout autre modèle offrant des performances du même ordre). Un tel microordinateur comprend essentiellement, outre quelques broches de service (alimentation, horloge, remise à zéro, commandes de bus), 32 broches réparties en 4 groupes de broches de chacun 8 eb pouvant presque tous être programmés arbitrairement en entrée ou en sortie. Il va de soi que compte tenu de la souplesse offerte par cette programmation, on peut obtenir un résultat donné en utilisant des combinaisons très diverses des broches et que la configuration décrite ci-après n'est qu'un exemple parmi beaucoup d'autres.

Le groupe (P10-P17) fournit 8 signaux SEL0 à SEL7 de sélection des modules mémoire M0 à M7. Le groupe (P00-P07) fournit 8 valeurs différentes de l'eb d'adresse A15 auxdits modules. Le groupe (P20-P25) fournit les eb d'adresses lignes A9 à A14, et sur P27 un signal NP indiquant le nombre de points (512 ou 256). Tous les signaux de type « BUS » (adresses et SEL) sont immobilisés dans des bascules de mémoire avec amplificateurs de sortie à 3 états ou barrières (C4, C5, C6), afin de permettre l'intervention d'autres dispositifs, non précisés ici, sur le bus d'adresses. A noter que sous certaines conditions, les fonctions des barrières C4, C5 et C6 peuvent être éventuellement prises directement en compte par le microordinateur, les groupes 0 et 1 pouvant être placés à haute impédance et le groupe 2 à drain ouvert. Ces barrières supplémentaires ont l'avantage de fournir une puissance électrique beaucoup plus importante sur le bus tout en améliorant la souplesse. Leur contenu est en effet remis à jour par l'impulsion de ligne H, tout l'intervalle de temps jusqu'au prochain H étant disponible pour la préparation de la ligne suivante. D'autre part elles sont ouvertes en direction du BUS par le signal de cadrage vertical CV.

Le groupe (P30-P37) reçoit les trois signaux de synchronisation vidéo I, V et H sur P31, P33, assure le dialogue avec le superviseur 9 par P30 et P37 et émet les signaux MOD et CV sur P34 et P35. Les entrées P31, P32, et P33 peuvent être utilisées comme entrées d'interruption, grâce à quoi notamment chaque impulsion H provoque l'incrémentation du compte de ligne, son test et la modification correspondante des adresses. Par exemple, en 512 lignes tramées, on peut envoyer le contenu de 64 lignes dans chaque module (32 pour la trame paire et 32 pour la trame impaire) avec initialisation du compte à 0 ou 1 selon que la trame est paire ou impaire, progression de 2 à chaque impulsion H, commutation de SELi, SELi + 1, lors du passage par 0 (égal à 64 puisque l'on compte sur 6 eb). Si l'on envoie un signal actif sur plusieurs fils SELi, la même information est envoyée à plusieurs modules simultanément. L'élément binaire A15 permet de choisir celle des deux moitiés de chaque module $M_i$ où est logée l'information. La combinaison de ces deux possibilités permet des recouvrements entre les tranches d'image successives.

Le circuit de commande C2 reçoit la synchronisation horizontale H et, en provenance du microordinateur, les signaux MOD (saisie ou restitution), NP (512 ou 256 points), CV de cadrage vertical (comme précédemment). On note une certaine simplification par rapport au schéma plus général de la figure 4. Le cadrage horizontal CH est invariable. Il n'y a donc plus à le spécifier. De même la fréquence de conversion FC est implicite : F correspondant à 512 points, F/2 correspondant à 256 points. D'autre part le circuit esclave C2 émet les signaux de commande des convertisseurs (SYCAN, SYCNA et BL déjà mentionnés). Les signaux spécifiques de commande des mémoires dynamiques (SC et SR) et 7 fils d'adresse A2 à A8. On notera que ces 7 adresses correspondent justement aux adresses rangées (poids faible) qu'il convient de faire progresser régulièrement pour assurer le rafraîchissement. Cela est de nature à faciliter l'arbitrage entre la nécessité du rafraîchissement et le risque de procéder à des écritures intempestives en mémoire. Il suffira de laisser tourner à vide le circuit esclave C2 pendant les périodes de non-conversion ; avec SR actif (pour rafraîchir) et SC inactif (pour ne pas écrire). Comme le champ des possibilités est limité à 512 ou 256, le configurateur C3 se résume à un multiplexeur (pour A8 et A9) sous contrôle du signal NP.

On a vu que les deux eb de poids faible A0 et A1 disparaissent du bus adresses. Leur fonction est reprise sous une autre forme par deux faisceaux de signaux de commande : soit CDMX à destination du démultiplexeur DMX intercalé entre le convertisseur d'entrée 2 et le bus de données K, et CMUX à destination du multiplexeur MUX, intercalé entre le bus de données K et le convertisseur de sortie 4. Grâce à quoi le bus K fonctionne à une fréquence quatre fois plus faible que les convertisseurs. Ces multiplexeur et démultiplexeur sont ici réalisés avec chaque fois 4 barrières octales en parallèle, d'où la nécessité d'utiliser 4 signaux de commande différents. D'autres schémas sont possibles.

A la sortie du convertisseur numérique analogique un mélangeur MIX reconstitue le signal.

Les signaux SYCAN, CMUX, SYCNA fournis par l'un des compteurs de synchronisation (P1 ou P2), sous le contrôle de l'automate programmable C1, permettent en outre, selon le programme de cet automate, de reconfigurer les multiplexeur et démultiplexeur pour obtenir différents modes possibles de fonctionnement : image monochromatique ou images polychromatiques.

**Revendications**

1. Dispositif de saisie et de restitution en temps réel d'une image formée de trames successives de lignes de balayage, comportant des moyens (1) de production d'image fournissant des signaux analogiques représentatifs d'une image, au moins un convertisseur analogique-numérique (2) recevant ces signaux analogiques et fournissant des valeurs numériques, des moyens de traitement (A) aptes à traiter ces valeurs numériques et/ou produire d'autres valeurs numériques aptes à constituer une image pour permettre un affichage, des moyens de mémorisation (B) des valeurs numériques à traiter et des valeurs numériques traitées ou produites, au moins un convertisseur numérique-analogique (4) des valeurs numériques fournies par la mémoire, des moyens (D) pour synchroniser les moyens de production d'image et les convertisseurs analogique-numérique et numérique-analogique, un BUS de communication (K) entre les moyens de mémorisation (B), les moyens de traitement (A) et les convertisseurs (2, 4) et des moyens de commande (C1, C2) reliés aux moyens de synchronisation (D) pour commander l'adressage des moyens de mémorisation (B) et la synchronisation des convertisseurs (2, 4), caractérisé en ce que les moyens de commande comprennent un automate programmable (C1) et un circuit de commande câblé (C2), esclave de l'automate (C1), l'automate (C1) et le circuit de commande (C2) présentant des sorties d'adressage (7, 8) reliées à des moyens d'adressage des moyens de mémorisation (B), tandis que d'autres sorties du circuit de commande esclave (C2) sont reliées à des entrées de synchronisation des convertisseurs (2, 4), pour permettre la saisie et la restitution de l'image correspondant aux valeurs numériques enregistrées en mémoire, le dispositif comprenant en outre un démultiplexeur (DMX) des valeurs numériques fournies par le convertisseur analogique-numérique (2), un mutiplexeur (MX) recevant les valeurs numériques traitées, et un mélangeur (MIX) connecté entre les moyens d'affichage (5) et le convertisseur numérique-analogique (4), pour mélanger les signaux de sortie de ce convertisseur (4) avec un signal de synchronisation (S) fourni par les moyens de synchronisation (D), l'automate programmable (C1) étant un processeur qui commande le circuit de commande esclave (C2) pour que celui-ci adresse les moyens de mémorisation (B) pour que les moyens de traitement (A) traitent les valeurs numériques correspondant aux lignes de balayage de l'image saisie et/ou restituée en fonction des indications fournies par un superviseur (9) de l'automate programmable, le circuit esclave (C2) comprenant un générateur de fréquence de conversion (FC) actionné par l'automate programmable (C1), deux compteurs (P1, P2) reliés à l'automate programmable (C1) et au générateur (FC), un séquenceur d'adresses (S1) relié aux compteurs (P1, P2) pour commander l'adressage de la mémoire (B), l'un des deux compteurs (P2) fournissant des signaux (CDMX, SYCAN, CMUX, SYCNA) de synchronisation du démultiplexeur (DMX), du convertisseur analogique-numérique (2) du multiplexeur (MUX) et du convertisseur numérique-analogique (4), ces signaux permettant en outre de reconfigurer les multiplexeur et démultiplexeur pour obtenir plusieurs modes possibles de fonctionnement : images monochromatiques ou images polychromatiques, ce compteur (P2) étant relié au générateur (FC) et à l'automate (C1) qui lui fournit un signal de cadrage vertical (CV) qui est aussi appliqué à l'autre compteur (P1), cet autre compteur (P1) fournissant au séquenceur d'adresses (S1) un signal de cadrage horizontal (CH).

2. Dispositif de saisie et d'affichage selon la revendication 1, caractérisé en ce que lesdites sorties d'adressage (7, 8) sont reliées aux moyens d'adressage par l'intermédiaire d'un organe répartiteur (C3).

3. Dispositif de saisie selon la revendication 1, caractérisé en ce que le dispositif comporte en outre un séparateur de synchronisation (SSY) relié au convertisseur analogique-numérique (2) aux moyens de production d'image (1) et aux moyens de synchronisation (D), ce séparateur fournissant des signaux de repérage comprenant un signal de début d'image (IS), un signal de balayage vertical (VS) et un signal de balayage horizontal (HS), ainsi que des signaux vidéo (VIDE) débarrassés d'impulsions de synchronisation, les signaux de repérage étant appliqués à l'automate programmable (C1) par l'intermédiaire d'un commutateur (COM) et les signaux vidéo étant appliqués au convertisseur analogique-numérique (2).

4. Dispositif selon la revendication 1, caractérisé en ce que l'automate programmable (C1) comprend un processeur (C7) dont les entrées sont reliées au commutateur (COM) et au superviseur (9) et dont les sorties sont reliées, d'une part au circuit esclave et, d'autre part, à des bascules de mémorisation (C4, C5, C6) avec amplificateurs de sorties à 3 états, les sorties de ces bascules étant reliées à des moyens d'adressage de la mémoire (B).

5. Dispositif selon la revendication 4, caractérisé en ce que le processeur (C7) est un microordinateur monoboîtier.

6. Application du dispositif conforme à la revendication 4, à la saisie et à la restitution de l'image tramée fournie par un microscope électronique.

7. Application du dispositif conforme à la revendication 4, à la saisie et à la restitution de l'image tramée fournie par une source vidéo.

8. Application du dispositif conforme à la revendication 4, à la synthèse d'images de type vidéo.

**Claims**

1. Apparatus for the acquisition and restitution in real time of an image formed of successive frames of a raster, comprising image-production means (1) providing analog signals representing an image, at least one analog-digital converter (2) receiving the analog signals and providing digital values, processing means (A) adapted to process the digital values and/or produce other digital values to constitute an image for display, memory means (B) for the digital values to be processed and the digital values thereby processed or produced, at least one digital-analog converter (4) for digital values provided by the memory, means (D) for synchronising the image-production means and the analog-digital and digital-analog converters, a communication bus (K) between the memory means (B), the processing means (A) and the converters (2, 4) and control (C1, C2) connected to synchronization means (D) to control addressing of the memory means (B) and synchronization of the converters (2, 4), characterized in that the control means comprise a programmable computer (C1) and a control circuit (C2) slaved to the computer (C1), the computer (C1) and the control circuit (C2) having addressing outputs (7, 8) connected to the address means of the memory means (B) while other outputs of the slaved control circuit (C2) are connected to the synchronization inputs of the converters (2, 4), to enable acquisition and restitution of the image corresponding to the digital values registered in the memory, the apparatus additionally comprising a demultiplexer (DMX) of the digital values provided by the analog-digital converter (2), a multiplexer (MX) receiving the processed digital values, and a mixer (MIX) connected between the display means (5) and the digital-analog converter (4), to mix the output signals from said converter (4) with a synchronization signal (S) provided by the synchronization means (D), the programmable computer (C1) being a processor which commands the slaved control circuit (C2) so that it addresses the memory means (B) whereby the processing means (A) process the digital values corresponding to the scanning lines of the acquired and/or restored image as a function of signals provided by a supervisor (9) of the programmable computer, the slaved circuit (C2) comprising a conversion frequency generator (FC) actuated by the programmable computer (C1), two counters (P1, P2) connected to the programmable computer (C1) and the generator (FC) an address sequencer (S1) connected to the counters (P1, P2), to command addressing of the memory (B), one of the two counters (P2) providing synchronization signals (CDMX, SYCAN, CMUX, SYCNA) for the demultiplexer (DMX), the analog-digital converter (2), the multiplexer (MUX) and the digital-analog converter (4), said signals additionally allowing reconfiguration of the multiplexer and demultiplexer to obtain a plurality of possible modes of operation : monochromatic images or polychromatic images or polychromatic images, said counter (P2) being connected to the generator (FC) and to the computer (C1) which provides a vertical framing signal (CV) which is also supplied to the other counter (P1), said other counter (P1) providing a horizontal framing signal (CH) to the address sequencer (S1).

2. Apparatus for acquisition and display according to Claim 1, characterized in that said address outputs (7, 8) are connected to the address means through a distributor (C3).

3. Acquisition apparatus according to Claim 1, characterized in that the apparatus additionally comprises a synchronization separator (SSY) connected to the analog-digital converter (2), to image production means (1) and to synchronization means (D), said separator providing registration signals comprising an image-initiating signal (IS), a vertical scanning signal (VS) and a horizontal scanning signal (HS) as well as video signals (VIDE) from which synchronization pulses have been removed, the registration signals being supplied to the programmable computer (C) through a commutator (COM) and the video signals being supplied to the analog-digital converter (2).

4. Apparatus according to Claim 1, characterized in that the programmable computer $(C_1)$ comprises a processor $(C_7)$ whose inputs are connected to a commutator (COM) and the supervisor (9) and whose outputs are connected on the one hand to the slaved circuit, and on the other hand to memory multivibrators $(C_4, C_5, C_6)$ with threestate output amplifiers, the outputs of said multivibrators being connected to the address means of the memory (B).

5. Apparatus according to Claim 4, characterized in that the processor $(C_7)$ is a single-station microcomputer.

6. Application of a device according to Claim 4 to the acquisition and restitution of a raster image provided by an electronic microscope.

7. Application of a device according to Claim 4, to the acquisition and restitution of a raster image provided by a video source.

8. Apparatus according to Claim 4 to the synthesis of video images.

**Patentansprüche**

1. Vorrichtung zum Erfassen und zur Wiedergabe in Echtzeit eines aus aufeinanderfolgenden Teilbildern aus Abtastzeilen gebildeten Bildes, mit Bilderzeugungsmitteln (1), die für ein Bild typische Analogsignale liefern, mindestens einem Analog-Digitalumwandler (2), der diese Analogsignale empfängt und Digitalwerte liefert, mit Behandlungsmitteln (A), die diese Digitalwerte behandeln und/oder andere Digitalwerte erzeugen können, um ein Bild zu bilden, um dessen Anzeige zu ermöglichen, mit Speichermitteln (B) der zu behandelnden Digitalwerte und der behandelten oder erzeugten Digitalwerte, mit mindestens einem Digital-Analogumwandler (4) für die von dem Speicher gelieferten Digitalwerte, mit Mitteln (D), um die Bilderzeugungsmittel und die Analog-Digital- und Digital-Analogumwandler zu synchronisieren, einem Übertragungsweg (K) zwischen den Speichermitteln (B), den Behandlungsmitteln (A) und den Umwandlern (2, 4) und den Steuermitteln (C1, C2), die mit den Synchronisationsmitteln (D) verbunden sind, um die Adressierung der Speichermittel (B) und die Synchronisation der Umwandler (2, 4) zu steuern, dadurch gekennzeichnet, daß die Steuermittel einen programmierbaren Automaten (C1) und einen festverdrahteten Steuerschaltkreis (C2) umfassen, der dem Automaten (C1) untergeordnet ist, daß der Automat (C1) und der Steuerschaltkreis (C2) Adressierungsausgänge (7, 8) aufweisen, die mit Adressierungsmitteln der Speichermittel (B) verbunden sind, während andere Ausgänge des untergeordneten Steuerschaltkreises (C2) mit Synchronisationseingängen der Umwandler (2, 4) verbunden sind, um das Erfassen und die Wiedergabe des Bildes zu ermöglichen, welches den in dem Speicher aufgezeichneten Digitalwerten entspricht, daß die Vorrichtung ferner ein Demultiplexer (DMX) für die von dem Analog-Digitalumwandler (2) gelieferten Digitalwerte, einen die behandelten Digitalwerte empfangenden Multiplexer (MX) und eine Mischeinrichtung (MIX) umfaßt, die zwischen den Anzeigemitteln (5) und dem Digital-Analogumwandler (4) geschaltet ist, um die Ausgangssignale dieses Umwandlers (4) mit einem von den Synchronisationsmitteln (D) gelieferten Synchronisationssignal (S) zu mischen, daß der programmierbare Automat (C1) ein Prozessor ist, der den untergeordneten Steuerschaltkreis (C2) steuert, damit dieser die Speichermittel (B) adressiert, damit die Behandlungsmittel (A) die den Abtastlinien des erfaßten und/oder wiedergebildeten Bildes entsprechenden Digitalwerte in Funktion von Anzeigen behandeln, die von einem Oberprogramm (9) des programmierbaren Automaten geliefert werden, daß der untergeordnete Schaltkreis (C2) einen von dem programmierbaren Automaten (C1) betätigbaren Umwandlungsfrequenzgenerator (FC), zwei mit dem programmierbaren Automaten (C1) und dem Generator (FC) verbundene Zähler (P1, P2) und einen Adressenfolgeschalter (S1) umfaßt, der mit den Zählern (P1, P2) verbunden ist, um die Adressierung des Speichers (B) zu steuern, wobei einer der beiden Zähler (P2) Synchronisationssignale (CDMX, SYCAN, CMUX, SYCNA) für den Demultiplexer (DMX), den Analog-Digitalumwandler (2) des Multiplexers (MUX) und des Digital-Analogumwandlers (4) liefert und diese Signale ferner ermöglichen, Multiplexer und Demultiplexer zu konfigurieren, um mehrere mögliche Betriebsarten zu erhalten : einfarbige Bilder oder mehrfarbige Bilder, daß dieser Zähler (P2) mit dem Generator (FC) und dem Automaten (C1) verbunden ist, der ihm ein Signal zur vertikalen Ausrichtung (CV) liefert, welches auch an den anderen Zähler (P1) gegeben wird, und daß dieser andere Zähler (P1) der Adressenfolgeschaltung (S1) ein Horizontalausrichtungssignal (CH) liefert.

2. Vorrichtung zum Erfassen und Anzeigen nach Anspruch 1, dadurch gekennzeichnet, daß die Adressierungsausgänge (7, 8) mit den Adressierungsmitteln über ein Zuteilungsorgan (C3) verbunden sind.

3. Vorrichtung zum Erfassen nach Anspruch 1, dadurch gekennzeichnet, daß die Vorrichtung ferner ein Amplitudensieb (SSY) umfaßt, welches mit dem Digital-Analogumwandler (2), den Bilderzeugungsmitteln (1) und den Synchronisationsmitteln (D) verbunden ist, daß das Amplitudensieb Ausrichtsignale, die ein Bildanfangsignal (IS), ein vertikales Abtastsignal (VS) und ein horizontales Abtastsignal (HS) umfassen, sowie von Synchronisationsimpulsen befreite Videosignale (VIDE) liefert, daß die Ausrichtsignale an den programmierbaren Automaten (C1) mittels eines Umschalters (COM) und die Videosignale an den Analog-Digitalumwandler (2) anzulegen sind.

4. Vorrichtung nach Anspruch 1, dadurch gekennzeichnet, daß der programmierbare Automat (C1) einen Prozessor (C7) aufweist, dessen Eingänge mit dem Schalter (COM) und dem Überwacher (9) und dessen Ausgänge einerseits mit dem untergeordneten Schaltkreis und andererseits mit Speicherkippschaltungen (C4, C5, C6) mit Verstärkern mit Ausgängen mit drei Zuständen verbunden sind, daß die Ausgänge dieser Kippschaltungen mit den Adressierungsmitteln des Speichers (B) verbunden sind.

5. Vorrichtung nach Anspruch 4, dadurch gekennzeichnet, daß der Prozessor (C7) eine Mikrosteuereinrichtung mit nur einem Gehäuse ist.

6. Anwendung der Vorrichtung nach Anspruch 4 zum Erfassen und zur Wiedergabe eines von einem Elektronenmikroskop gelieferten Teilbildes.

7. Anwendung der Vorrichtung nach Anspruch 4 zur Erfassung und Wiedergabe eines von einer Videoquelle gelieferten Teilbildes.

8. Anwendung der Vorrichtung nach Anspruch 4 zur Synthese von Videobildern.

0 086 677

FIG. 1

FIG. 2

FIG. 3

1

FIG. 4

0

57

81

512 Lignes

593

619

625

RETOUR TRAME

CV=∅

512 points = 41 μs

CV=1

CV=∅

RETOUR TRAME

52 μs

D   E                    F   G

# FIG. 5

622 624 1 3 5 7 9 11 13 15 55 57 59 61 615 617 619 621 623 625 1 2 4 6 8 10 12

I

II

V

V

20 ms

B G

A B C D E H F G

III

47µs

12µs 5,5µs

41µs (512 points) 6µs

64µs

Début de ligne

E H

IV

Début de conversion

0 1 2 µs

Fin de conversion

FIG. 6

0 086 677

FIG. 7A

FIG. 7B